# EUROPEAN PATENT APPLICATION

(11) **EP 4 461 480 A1**
(43) Date of publication of application: **13.11.2024**
(21) Application number: 23762891.2
(22) Date of filing: 28.02.2023
(51) Int. Cl.: B25J 19/06

(54) **ANTI-COLLISION DEVICE AND ROBOT**

(30) Priority: 04.03.2022 CN 202220475897 U; 29.10.2022 CN 202222873262 U
(71) Applicant: Shenzhen Mammotion Innovation Co., Limited, Shenzhen, Guangdong 518000 (CN)
(72) Inventor: WEI, Jidong, Shenzhen, Guangdong 518000 (CN); CHEN, Shaojie, Shenzhen, Guangdong 518000 (CN); XU, Yuanjun, Shenzhen, Guangdong 518000 (CN); ZHENG, Wei, Shenzhen, Guangdong 518000 (CN); HUA, Jinfeng, Shenzhen, Guangdong 518000 (CN)
(74) Representative: RGTH
(86) International application number: PCT/CN2023/078894
(87) International publication number: WO 2023/165492

(57) **Abstract**

Provided in the present application are an anti-collision device (1) and a robot (1000). The anti-collision device (1) comprises a first connecting member (10), a working structure (20) and a first elastic member (31), wherein the first connecting member (10) is fixedly connected to a robot body (2), the working structure (20) is arranged on a side of the first connecting member (10) away from the robot body (2), the first elastic member (31) is located between the first connecting member (10) and the working structure (20), and the first elastic member (31) is deformed when the working structure (20) is impacted. The first elastic member (31) of the anti-collision device (1) of the present application is elastically deformed when the working structure (20) is impacted, and thus the working structure (20) is deflected relative to the first connecting member (10), such that an impact force acting on the working structure (20) can be offset, thereby reducing the probability of the anti-collision device (1) being damaged when coming into contact with an obstacle.

## Description

### Technical Field

The present application relates to the field of robots, and in particular to an anti-collision device and a robot.

### Background Art

With the development of science and technology, the types and functions of robots are increasing. Robots are increasingly used for agricultural operations in replace of labours. For example, a lawn mower is used for mowing grass. A lawn mower of the related art generally requires the installation of an anti-collision device for detecting an obstacle and preventing a body of the lawn mower from being damaged by a collision, but the existing anti-collision device is susceptible to damages in the event of a collision, it is then necessary to replace the anti-collision device. Therefore, how to reduce the probability of damages to the anti-collision device when it comes into contact with an obstacle becomes a technical problem to be solved.

### Summary of the Invention

An objective of the present application is to provide an anti-collision device and a robot to solve the technical problem of how to reduce the probability of the anti-collision device being damaged when it comes into contact with an obstacle.

In a first aspect, the present application provides an anti-collision device to be mounted to a robot body, the anti-collision device comprising:
a first connecting member fixedly connected to the robot body;
a working structure provided on a side of the first connecting member away from the robot body; and
a first elastic member located between the first connecting member and the working structure, the first elastic member being configured to deform when the working structure is impacted.

In the anti-collision device provided in the present application, the first connecting member is fixedly connected to the robot body, the first elastic member is located between the first connecting member and the working structure, and the first elastic member may be configured to deform when the working structure is impacted. Compared with the manner in which the anti-collision device of the related art fixedly connects the first connecting member to the working structure, the anti-collision device of the present application has a first elastic member, and the first elastic member is elastically deformed when the working structure is impacted, thereby deflecting the working structure relative to the first connecting member, such that an impact force acting on the working structure can be offset, thereby reducing the probability of the anti-collision device being damaged when coming into contact with an obstacle.

The working structure comprises a first substrate and an impact guard disposed on a side of the first substrate away from the first connecting member;
the first substrate comprises a first arm, a mounting portion, and a second arm arranged in sequence; and
at least one first elastic member is provided, the first elastic member elastically abuts between the mounting portion and the first connecting member, and the first elastic member is disposed in a direction perpendicular to or intersecting with the first substrate, the first substrate being deflected when the first or second arm is impacted.

Two first elastic members are provided, two of the first elastic members being arranged side by side in an extension direction of the working structure.

At least one first through hole is provided in the first substrate;
the first connecting member comprises a first bearing portion and a first fixing member extending through the first through hole, the first fixing member being fixedly connected to the first bearing portion at one end and being provided with a first blocking portion at the other end; and
the first elastic member surrounds the first fixing member, and the first elastic member has one end abutting against the first blocking portion and the other end abutting against the first substrate.

The first through hole is configured as an elongated hole, the first through hole extending in the same direction as the first substrate.

The first connecting member comprises a second substrate on which at least one second through hole is formed, the working structure further comprising a second fixing member, the second fixing member being fixed to the first substrate through the second through hole, an end of the second fixing member away from the second substrate being provided with a second blocking portion, the first elastic member surrounding the second fixing member, and the first elastic member having one end abutting against the second blocking portion and the other end abutting against the second substrate.

The anti-collision device further comprises a rotating assembly arranged between the working structure and the first connecting member, wherein the rotating assembly comprises a first mating portion and a second mating portion, the first mating portion is arranged on the working structure, the second mating portion is arranged on the first connecting member, and the first mating portion is configured to rotate relative to the second mating portion when the working structure is deflected relative to the first connecting member.

One of the first mating portion and the second mating portion is a ball hinge bearing and the other is a ball hinge; or one of the first mating portion and the second mating portion is a pivot bearing and the other is a rotating member; or one of the first mating portion and the second mating portion is a torsion spring bearing and the other is a rotating member.

The working structure comprises:
a first substrate; and
an impact guard connected to one side of the first substrate; wherein the first connecting member is connected to a side of the first substrate away from the impact guard, the first connecting member comprises two movable connecting portions disposed opposite each other, and the connecting portion is configured to be detachably mounted to the robot body.

The first connecting member further comprises:
a first bearing portion connected to the side of the first substrate away from the impact guard and configured to bear the two connecting portions; and
a first support protruding from the first bearing portion in a direction away from the first substrate.

The two connecting portions are respectively provided with a receiving space on opposite sides thereof, and the connecting portion is partially received in the receiving space;
the connecting portion comprises a pressing portion, an engaging portion, an elastic compression portion, and a rotating portion; and the elastic compression portion is located between the pressing portion and a side wall on the side of the receiving space adjacent to the pressing portion, the pressing portion is connected to the engaging portion, an end of the engaging portion adjacent to the pressing portion is in fit connection with the rotating portion, the engaging portion is rotatable relative to the rotating portion, and the engaging portion is configured to engage with the robot body.

The first connecting member further comprises a first signal interface, the first signal interface being disposed on a side of the first bearing portion away from the first substrate, and the first signal interface being configured for signal transmission.

The anti-collision device further comprises:
a signal light provided on the impact guard, the signal light being electrically connected to the first signal interface.

The impact guard further comprises:
a second bearing portion fixedly connected to the first substrate;
a first switch disposed on a side of the second bearing portion away from the first substrate, the first switch being disposed at an end of the second bearing portion remote from the first connecting member, and the first switch being electrically connected to the first signal interface; and
a second switch disposed on the same side of the second bearing portion as the first switch, the second switch being further from the first switch than to the first connecting member, and the second switch being electrically connected to the first signal interface.

The impact guard further comprises:
a movable portion disposed on the side of the second bearing portion away from the first substrate; and
a second elastic member elastically connected to the movable portion and the second bearing portion.

In a second aspect, the present application provides a robot comprising:
any anti-collision device as described above; and
a robot body, the anti-collision device being detachably mounted to the robot body.

The robot body comprises a second connecting member detachably connected to the first connecting member, wherein the first connecting member comprises a connecting portion, and the second connecting member comprises two fixed connecting portions arranged opposite each other, the fixed connecting portions being in fit connection with the connecting portions and being useful for detachably connecting the anti-collision device to the robot body.

The robot body comprises a second connecting member detachably connected to the first connecting member, the first connecting member comprising a first support, and the second connecting member further comprising:
a second support in fit connection with the first support.

The impact guard comprises a second bearing portion, a first switch and a second switch, and when the first connecting member comprises a first signal interface, the second connecting member further comprises:
a second signal interface electrically connected to the first signal interface to receive a trigger signal, wherein at least one of the first switch and the second switch is triggered to generate the trigger signal when the anti-collision device comes into collision with an obstacle;
wherein the robot further comprises a central control system electrically connected to the second signal interface, the central control system being configured to control the robot body to move in accordance with the trigger signal so as to avoid the obstacle.

### Brief Description of the Drawings

In order to describe the technical solutions in the embodiments of the present application more clearly, the accompanying drawings for illustration in the embodiments are briefly described. Apparently, the accompanying drawings in the following description show merely some embodiments of the present application, and those of ordinary skill in the art would have obtained other drawings from these accompanying drawings without creative efforts.
FIG. 1 is a schematic structural diagram of a robot according to a first implementation of the present application.
FIG. 2 is a schematic exploded view of an anti-collision device according to a first implementation of the present application.
FIG. 3 is a schematic structural cross-sectional view of an anti-collision device according to a first implementation of the present application.
FIG. 4 is a schematic structural diagram of a first substrate according to a first implementation of the present application.
FIG. 5 is a schematic structural diagram of an anti-collision device according to a second implementation of the present application.
FIG. 6 is a partial schematic structural diagram of an anti-collision device according to some implementations of the present application.
FIG. 7 is a schematic structural diagram of an anti-collision device according to a third implementation of the present application.
FIG. 8 is a schematic structural diagram of an anti-collision device according to a fourth implementation of the present application.
FIG. 9 is a schematic structural diagram of an anti-collision device according to a fifth implementation of the present application.
FIG. 10 is a partial schematic structural diagram of an anti-collision device according to a fifth implementation of the present application.
FIG. 11 is a schematic structural diagram of an anti-collision device according to an implementation of the present application.
FIG. 12 is a schematic cross-sectional view along line A-A of an implementation of the anti-collision device according to the implementation of FIG. 11.
FIG. 13 is a partial enlarged schematic diagram of the anti-collision device at part I according to the implementation of FIG. 12.
FIG. 14 is a schematic structural diagram of an anti-collision device according to another implementation of the present application.
FIG. 15 is a schematic structural diagram of an anti-collision device according to a further implementation of the present application.
FIG. 16 is a schematic structural diagram of an anti-collision device according to a further implementation of the present application.
FIG. 17 is a schematic cross-sectional view along line A-A of another implementation of the anti-collision device according to the implementation of FIG. 11.
FIG. 18 is a schematic cross-sectional view along line A-A of a further implementation of the anti-collision device according to the implementation of FIG. 11.
FIG. 19 is a schematic diagram of a first connecting member cooperating with a second connecting member of the robot according to the implementation of the present application.
FIG. 20 is a partial enlarged schematic diagram of an implementation at part II according to the implementation of FIG. 19.
FIG. 21 is a partial enlarged schematic diagram of another implementation at part II according to the implementation of FIG. 19.
FIG. 22 is a partial enlarged schematic diagram of a further implementation at part II according to the implementation of FIG. 19.
FIG. 23 is a block diagram of a connection for transmitting a trigger signal for the robot according to the implementation of FIG. 22.

List of reference numerals: robot - 1000, anti-collision device - 1, robot body - 2, first connecting member - 10, connecting portion - 11, pressing portion - 1111, engaging portion - 1112, elastic compression portion - 1113, rotating portion - 1114, receiving space - 112, first bearing portion - 113, first support - 114, first signal interface - 115, first fixing member - 12, first blocking portion - 13, second substrate - 14, second through hole - 15, second fixing member - 16, second blocking portion - 17, working structure - 20, first substrate - 21, first arm - 211, second arm - 212, mounting portion - 213, first through hole - 214, impact guard - 22, second bearing portion - 221, movable portion - 222, signal light - 23, impact sensor - 24, first switch - 241, second switch - 242, second elastic member - 25, first elastic member - 31, rotating assembly - 40, first mating portion - 41, torsion spring - 411, pin - 412, second mating portion - 42, second connecting member - 510, fixed connecting portion - 511, second support - 512, second signal interface - 513, central control system - 60.

### Detailed Description of Embodiments

The technical solutions in the embodiments of the present application will be described clearly and completely below with reference to the accompanying drawings in the embodiments of the present application. Apparently, the described embodiments are only some rather than all of the embodiments of the present application. All other embodiments obtained by those of ordinary skill in the art based on the embodiments of the present application without creative efforts shall fall within the protection scope of the present application.

The "embodiment" or "implementation" mentioned herein means that a particular feature, structure, or characteristic described with reference to the embodiment or implementation may be included in at least one embodiment of the present application. The phrase at various locations in the description does not necessarily refer to the same embodiment, or an independent or alternative embodiment exclusive of another embodiment. Those skilled in the art understand explicitly or implicitly that the embodiment described herein may be combined with another embodiment.

It should be noted that the terms "first", "second", and the like in the specification, the claims, and the accompanying drawings of the present application are used to distinguish different objects, rather than to describe a particular order. In addition, the terms "comprise" and "have" and any variations thereof are intended to cover a non-exclusive inclusion.

In the specification, for the sake of convenience, the illustration of a position relationship between constituent elements with reference to the accompanying drawings using the words such as "middle", "up", "down", "front", "rear", "vertical", "horizontal", "top", "bottom", "inner", and "outer" that indicate an orientation or position relationship is merely for ease and conciseness of description of the specification, rather than indicating or implying that the apparatuses or elements referred to must have a particular orientation or be constructed and operated in a particular orientation, and therefore shall not be construed as limiting the present disclosure. The position relationship between the constituent elements is appropriately changed depending on directions of the described constituent elements. Therefore, the position relationship is not limited to the words described in the specification, which may be appropriately replaced depending on the situation.

In this specification, the terms "mount", "connected", and "connect" should be construed in a broad sense, unless otherwise expressly specified and defined. For example, it may be a fixed connection, or a detachable connection, or an integral connection; or may mean a mechanical connection or an electrical connection; or may be a direct connection, an indirect connection by means of an intermediate member, or internal communication between two elements. Those of ordinary skill in the art may understand the meanings of the above terms in the present disclosure based on the situation.

With the development of science and technology, the types and functions of robots are increasing. Robots are increasingly used for agricultural operations in replace of labours. For example, a lawn mower is used for mowing grass. A lawn mower of the related art generally requires the installation of an anti-collision device for detecting an obstacle and preventing a body of the lawn mower from being damaged by a collision, but the existing anti-collision device is susceptible to damages in the event of a collision, it is then necessary to replace the anti-collision device. Therefore, how to reduce the probability of damages to the anti-collision device when it comes into contact with an obstacle becomes a technical problem to be solved.

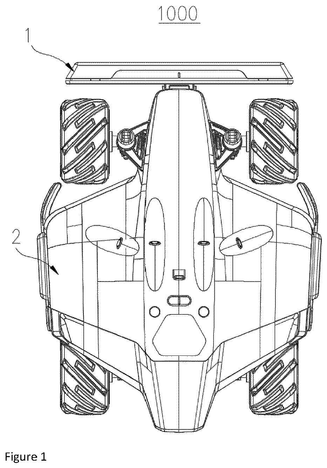

Referring to FIG. 1, FIG. 1 is a schematic structural diagram of a robot according to a first implementation of the present application. The present application provides a robot 1000 comprising a robot body 2 and an anti-collision device 1, the anti-collision device 1 being configured to protect the robot body 2 from collisions.

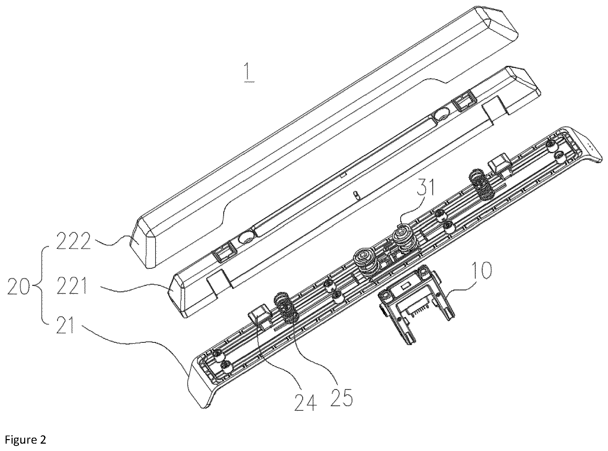

Referring to FIGS. 1 and 2, FIG. 2 is a schematic exploded view of an anti-collision device according to a first implementation of the present application. The present application provides an anti-collision device 1 to be mounted to a robot body 2. The anti-collision device 1 comprises a first connecting member 10, a working structure 20 and a first elastic member 31. The first connecting member 10 is fixedly connected to the robot body 2. The working structure 20 is disposed on a side of the first connecting member 10 away from the robot body 2. The first elastic member 31 is located between the first connecting member 10 and the working structure 20, and the first elastic member 31 is configured to deform when the working structure 20 is impacted. The first elastic member 31 can elastically abut between the first connecting member 10 and the working structure 20, or the first elastic member 31 is connected to the first connecting member 10 at one end, and is connected to the working structure 20 at the other end.

The anti-collision device 1 is configured to be mounted to the robot body 2. Optionally, in this implementation, the robot 1000 is a lawn mower robot and the robot body 2 is a lawn mower body. In other implementations, the robot 1000 may also be other types of robots, such as a pesticide spraying robot, a crop harvesting robot, etc. which are implementations of the present application and should not be construed as limiting the present application.

The working structure 20 is disposed on the side of the first connecting member 10 away from the robot body 2, and the robot body 2, the first connecting member 10 and the working structure 20 are sequentially arranged in a forward direction of the robot body 2. When there is an obstacle in a travel direction of the robot body 2, the working structure 20 first encounters the obstacle to prevent the robot body 2 from being damaged by a collision with the obstacle. Moreover, the working structure 20 first encounters the obstacle, can identify the obstacle when the robot body 2 performs path planning, and instructs other structural members to take appropriate measures to avoid the obstacle.

The anti-collision device 1 further comprises a first connecting member 10, the first connecting member 10 being fixedly connected to the robot body 2, and the first connecting member 10 being detachably mounted to the robot body 2. In this implementation, the first connecting member 10 is mounted to the robot body 2 by means of snap connection, and in other implementations, the first connecting member 10 can also be fixedly connected to the robot body 2 by means of other fixed connections, such as bonding, threaded connection or other connection method. Since the anti-collision device 1 and the robot body 2 are detachably mounted, when the anti-collision device 1 hits an obstacle, if the working structure 20 is damaged, the anti-collision device 1 can be dismounted for repair or replacement, and there is no need to repair the robot body 2.

The first elastic member 31 is elastically connected between the first connecting member 10 and the working structure 20, and the first elastic member 31 is configured to deform when the working structure 20 is impacted. The first elastic member 31 is deformed, and also allows the working structure 20 to be deflected relative to the first connecting member 10.

In the anti-collision device 1 provided in the present application, the first connecting member 10 is fixedly connected to the robot body 2, the first elastic member 31 is elastically connected between the first connecting member 10 and the working structure 20, and the first elastic member 31 can be configured to deform when the working structure 20 is impacted. The first elastic member 31 can elastically abut between the first connecting member 10 and the working structure 20. Compared with the manner in which the anti-collision device of the related art fixedly connects the first connecting member to the working structure, the anti-collision device 1 of the present application has a first elastic member 31, and the first elastic member 31 is elastically deformed when the working structure 20 is impacted, thereby deflecting the working structure 20 relative to the first connecting member 10, such that an impact force acting on the working structure 20 can be offset, thereby reducing the probability of the anti-collision device 1 being damaged when coming into contact with an obstacle.

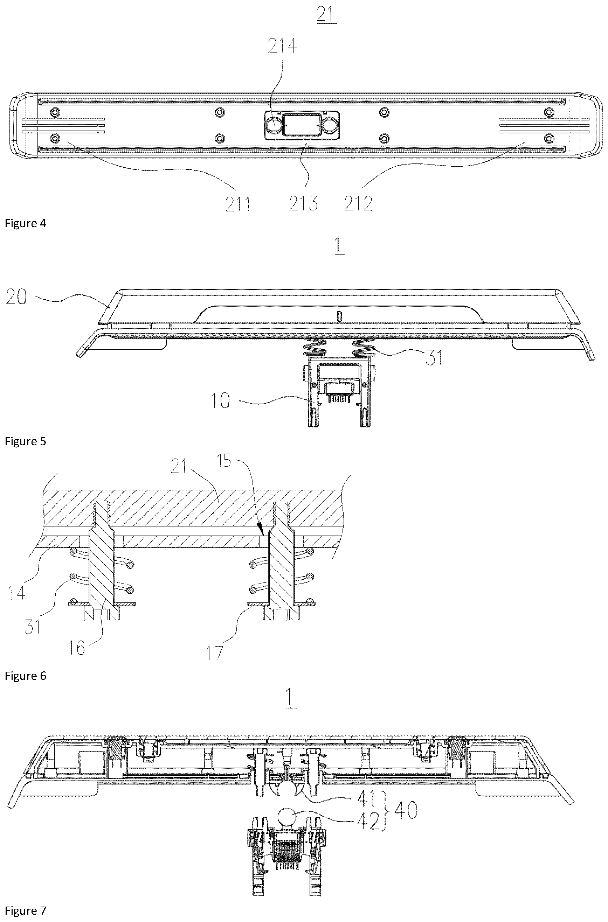

Referring to FIGS. 1 to 4, FIG. 3 is a schematic structural cross-sectional view of an anti-collision device according to a first implementation of the present application, and FIG. 4 is a schematic structural diagram of a first substrate according to a first implementation of the present application. The working structure 20 comprises a first substrate 21. The first substrate 21 comprises a first arm 211, a mounting portion 213, and a second arm 212 arranged in sequence. The mounting portion 213 is located between the first arm 211 and the second arm 212.

The first elastic member 31 is set to be at least one. The first elastic member 31 elastically abuts between the mounting portion 213 and the first connecting member 10, and the first elastic member 31 is disposed in a direction perpendicular to or intersecting with the first substrate 21, the first substrate 21 being deflectable relative to the first connecting member 10. The first substrate 21 may be deflected relative to the first connecting member 10 when the first arm 211 or the second arm 212 is impacted. For example, the first elastic member 31 may be configured as a spring, the first elastic member 31 may be disposed in a direction of a central axis of the spring, the direction of the central axis of the spring being perpendicular to or intersecting with an extension direction of the first substrate 21, and the first substrate 21 may extend in a direction from the first arm 211 to the second arm 212 or in a direction from the second arm 212 to the first arm 211.

Optionally, in this implementation, the first elastic member 31 is provided on a side of the first substrate 21 away from the first connecting member 10, and in another implementation, referring to FIGS. 1 and 5, FIG. 5 is a schematic structural diagram of an anti-collision device according to a second implementation of the present application. The first elastic member 31 can also be arranged between the first substrate 21 and the first connecting member 10, the first elastic member 31 being connected at one end to the first connecting member 10 and at the other end to the first substrate 21 in the working structure 20. The first elastic member 31 can be elastically deformed and the working structure 20 is deflected relative to the first connecting member 10, which should not be construed as limiting the present application.

Specifically, if the first arm 211 is the left arm in the drawing and the second arm 212 is the right arm in the drawing, when an area of the working structure 20 corresponding to the first arm 211 encounters an obstacle, the first arm 211 is impacted and moves in a direction close to the robot body 2, the second arm 212 moves in a direction away from the robot body 2, and the first substrate 21 as a whole is deflected in a counterclockwise direction relative to the first connecting member 10. When an area of the working structure 20 corresponding to the second arm 212 encounters an obstacle, the second arm 212 is impacted and moves in a direction close to the robot body 2, the first arm 211 moves in a direction away from the robot body 2, and the first substrate 21 as a whole is deflected in a clockwise direction relative to the first connecting member 10. When the obstacle with which the working structure 20 collides is separated from the working structure 20, the deflected working structure 20 is reset due to the deformation of the first elastic member 31.

It should be noted that the number of the first elastic members 31 may be 1, 2, 3 or 4, or greater than 4, and the present application is merely exemplified by the number of the first elastic members 31 being 2, which should not be construed as limiting the present application.

Referring to FIGS. 1 to 4, in an implementation, the first elastic member 31 is provided in the working structure 20. At least one first through hole 214 is provided in the first substrate 21.

The first connecting member 10 comprises a first bearing portion 113 and a first fixing member 12, the first fixing member 12 penetrates through the first through hole 214, the first fixing member 12 is fixedly connected at one end to the first bearing portion 113, and a first blocking portion 13 is provided at the other end.

The first elastic member 31 surrounds the first fixing member 12. The first elastic member 31 is located between the first blocking portion 13 of the first connecting member 10 and the first substrate 21 of the working structure 20. The first elastic member 31 abuts against the first blocking portion 13 at one end and the first substrate 21 at the other end.

The first fixing member 12 can be configured to fix the first elastic member 31, the first elastic member 31 surrounds the first fixing member 12, and the first fixing member 12 can be configured to guide an extension direction of the elastic deformation of the first elastic member 31 when the first elastic member 31 is elastically deformed, thereby avoiding unfavorable bending of the first elastic member 31. In this implementation, two first elastic members 31 are provided to enhance the elastic reset ability of the anti-collision device 1, so that the impact force acting on the working structure 20 can be better offset by the anti-collision device 1, thereby reducing the probability of the anti-collision device 1 being damaged when coming into contact with an obstacle. The two first elastic members 31 are arranged side by side in an extension direction of the working structure 20. The working structure 20 extends in a direction parallel to the extension direction of the first substrate 21. The working structure 20 is deflectable relative to the first connecting member 10, and a deflection axis of the working structure 20 is located between the two first elastic members 31. Thus, when the working structure 20 is deflected relative to the first connecting member 10, the working structure 20 will have a better resistance to an impact and the ability to reset after the impact, under the elastic force of the two first elastic members 31.

Two first fixing members 12 are correspondingly provided, and the two first elastic members 31 respectively surround the two first fixing members 12. One of the two first elastic members 31 is located near the first arm 211 and the other is located near the second arm 212. When the first arm 211 is impacted and moves in a direction close to the robot body 2, the first elastic member 31 disposed close to the second arm 212 is pressed by the second arm 212 and becomes deformed. When the second arm 212 is impacted and moves in a direction close to the robot body 2, the first elastic member 31 disposed close to the first arm 211 is pressed by the first arm 211 and becomes deformed.

The first fixing member 12 is fixed to the first bearing portion 113. In this implementation, the first fixing member 12 is a bolt, the first connecting member 10 is provided with a threaded hole, and the first fixing member 12 and the first connecting member 10 are fixed by means of a threaded connection. In other implementations, the first fixing member 12 may also be fixed to the first bearing portion 113 by other means, which is not limited in the present application.

In this implementation, the first blocking portion 13 is a block sheet, and when one end of the first elastic member 31 abuts against the first blocking portion 13, the first blocking portion 13 abuts against one end of the first fixing member 12. In other implementations, when the first fixing member 12 is a bolt, the first blocking portion 13 may also be a nut of the bolt, only if one end of the first elastic member 31 is able to abut against the nut.

The first through hole 214 is configured as an elongated hole, and the first through hole 214 extends in the same direction as the first substrate 21.

In other words, when the working structure 20 is deflected relative to the first connecting member 10, a certain displacement of the working structure 20 in a horizontal direction also occurs. The first through hole 214 is configured as an elongated hole, that is, a moving space can be provided for the working structure 20 when the latter is displaced in the horizontal direction, thereby facilitating the deflection of the working structure 20 relative to the first connecting member 10.

Referring to FIG. 6, FIG. 6 is a partial schematic structural diagram of an anti-collision device according to some implementations of the present application. In another implementation, the first elastic member 31 is provided in the first connecting member 10, which is similar to the structure in the above implementation. The first connecting member 10 comprises a second substrate 14, the second substrate 14 is provided with at least one second through hole 15. The working structure 20 further comprises a second fixing member 16, the second fixing member 16 is fixed to the first substrate 21 via the second through hole 15, a second blocking portion 17 is provided at an end of the second fixing member 16 away from the second substrate 14, and the second substrate 14 is located between the second blocking portion 17 and the first substrate 21. The first elastic member 31 surrounds the second fixing member 16, the first elastic member 31 is located between the second substrate 14 of the first connecting member 10 and the second blocking portion 17 of the working structure 20, and the first elastic member 31 has one end abutting against the second blocking portion 17 and the other end abutting against the second substrate 14.

Likewise, the second fixing member 16 can be configured to fix the first elastic member 31, and the first elastic member 31 surrounds the second fixing member 16. When the first elastic member 31 is elastically deformed, the second fixing member 16 can be configured to guide the extension direction of the elastic deformation of the first elastic member 31 to prevent an unfavorable bending of the first elastic member 31.

The second fixing member 16 is fixed to the working structure 20. In this implementation, the second fixing member 16 is a bolt, the working structure 20 is provided with a threaded hole, and the second fixing member 16 is fixed to the working structure 20 by means of a threaded connection. In other implementations, the second fixing member 16 may also be fixed to the working structure 20 by other means, which is not limited in the present application.

In this implementation, the second blocking portion 17 is a block sheet, and when one end of the first elastic member 31 abuts against the second blocking portion 17, the second blocking portion 17 abuts against one end of the second fixing member 16. In other implementations, when the second fixing member 16 is a bolt, the second blocking portion 17 may also be a nut of the bolt, provided that one end of the first elastic member 31 can abut against the nut.

The second through hole 15 is configured as an elongated hole, and the second through hole 15 extends in the same direction as the second substrate 14. The extension direction of the second substrate 14 may be parallel to the extension direction of the first substrate 21.

In this implementation, the working structure 20 is deflected relative to the first connecting member 10, that is, there must be a deflection axis. However, when left and right sides of the working structure 20 are hit by different deflection axes, and the working structure 20 will rub against the first connecting member 10 during deflection, so the degree of wear of the first connecting member 10 and the working structure 20 is increased and the service life thereof is reduced.

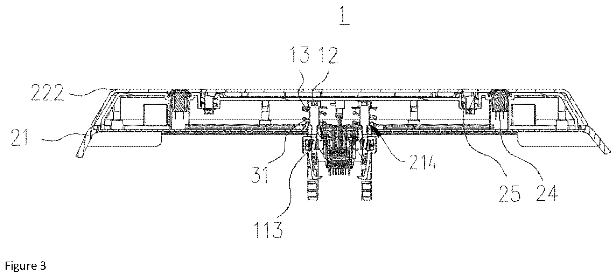

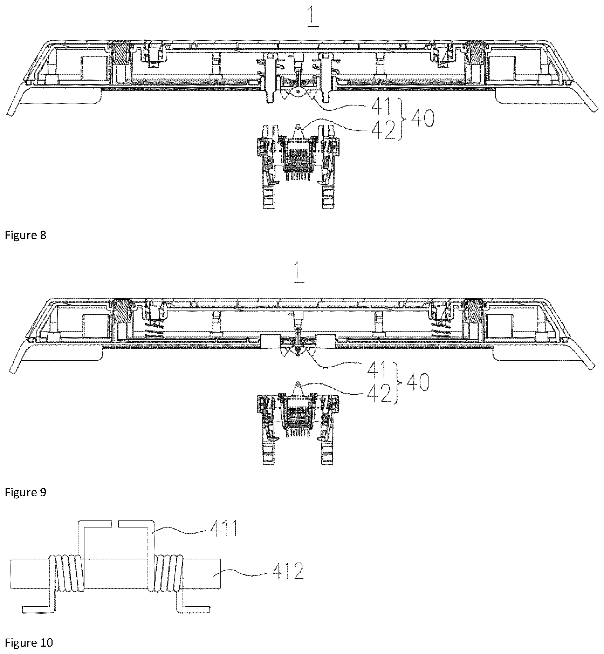

Referring to FIGS. 3, 7 and 8, FIG. 7 is a schematic structural diagram of an anti-collision device according to a third implementation of the present application. In an implementation, FIG. 8 is a schematic structural diagram of an anti-collision device according to a fourth implementation of the present application. The anti-collision device 1 further comprises a rotating assembly 40, the rotating assembly 40 is arranged between the working structure 20 and the first connecting member 10, the rotating assembly 40 comprises a first mating portion 41 and a second mating portion 42, the first mating portion 41 is arranged on the working structure 20, the second mating portion 42 is arranged on the first connecting member 10, and the first mating portion 41 is configured to rotate relative to the second mating portion 42 when the working structure 20 is deflected relative to the first connecting member 10.

The rotating assembly 40 is provided between the working structure 20 and the first connecting member 10, the rotating assembly 40 can facilitate rotation of the working structure 20 when the working structure 20 encounters an obstacle and is deflected relative to the first connecting member 10, and a deflection axis overlaps the rotating assembly 40, thereby allowing the working structure 20 to be deflected relative to the first connecting member 10 without direct contact with the first connecting member 10. The first mating portion 41 and the second mating portion 42 may be provided as a structural assembly suitable for rotation to improve the service life of the anti-collision device 1.

Referring to FIG. 7, in an implementation, one of the first mating portion 41 and the second mating portion 42 is a ball hinge bearing and the other is a ball hinge. Referring to FIG. 8, in another implementation, one of the first mating portion 41 and the second mating portion 42 may be a pivot bearing and the other may be a rotating member. The present application does not limit the rotational structure of the rotating assembly 40, as long as the rotating assembly rotates when the working structure 20 is deflected.

Referring to FIGS. 9 and 10, FIG. 9 is a schematic structural diagram of an anti-collision device according to a fifth implementation of the present application, and FIG. 10 is a partial schematic structural diagram of an anti-collision device according to a fifth implementation of the present application. In a further implementation, the first mating portion 41 is a torsion spring bearing and the second mating portion 42 is a rotating member. Specifically, the first mating portion 41 comprises a torsion spring 411 and a pin 412, the torsion spring 411 being arranged around the pin 412, and the torsion spring 411 has one end abutting against the first substrate 21 and the other end being configured to abut against the second mating portion 42. In this implementation, further, two torsion springs 411 are provided, and the torsion springs 411 are arranged in opposite directions. The second mating portion 42 is arranged between the two torsion springs 411. Upon rotation of the working structure 20 relative to the first connecting member 10, the working structure 20 rotates about the pin 412, the torsion spring 411 abuts against the second mating portion 42, and at least part of an impact force acting on the working structure 20 can be offset by the elastic force of the torsion spring 411 to improve the service life of the anti-collision device 1.

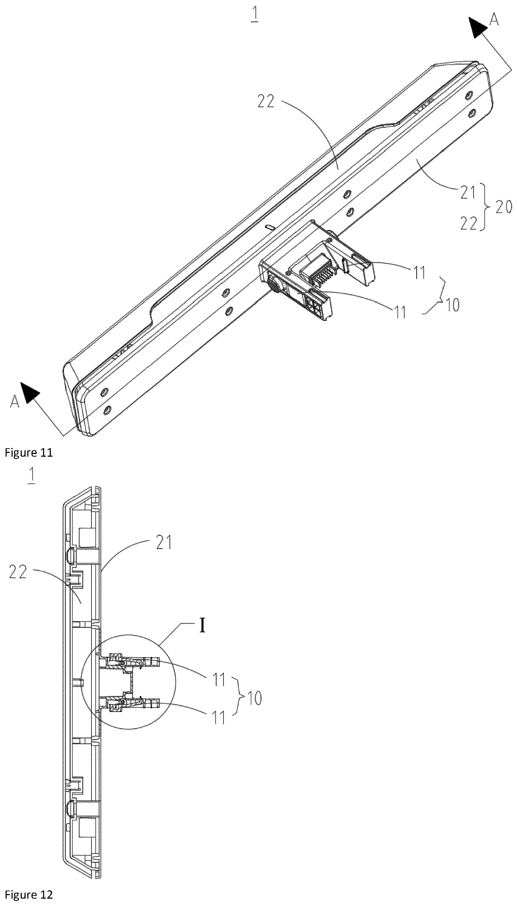

Referring to FIGS. 11 and 12, FIG. 11 is a schematic structural diagram of an anti-collision device according to an implementation of the present application; and FIG. 12 is a schematic cross-sectional view along line A-A of an implementation of the anti-collision device according to the implementation of FIG. 11. In this implementation, the working structure 20 comprises a first substrate 21 and an impact guard 22. The impact guard 22 is connected to one side of the first substrate 21. The first connecting member 10 is connected to a side of the first substrate 21 away from the impact guard 120, and the first connecting member 10 comprises two movable connecting portions 11 arranged opposite each other, the connecting portions 11 being configured to be detachably mounted to the robot body 2.

In this implementation, the anti-collision device 1 is used for installation in an automated apparatus, such as a lawnmower robot, a pesticide spraying robot, or a crop harvesting robot, etc. The anti-collision device 1 functions to prevent the body of the automated apparatus from being damaged by a direct collision with an obstacle in the course of an operation. In particular, the anti-collision device 1 is configured to identify the obstacle and to transmit a signal identifying the obstacle to the automated apparatus, so as to enable the automated equipment to avoid the obstacle.

In this implementation, the impact guard 22 is configured to identify the obstacle. The impact guard 22 may, but is not limited to, identify an obstacle by an ultrasonic sensor, a laser sensor, a pressure sensor or a contact sensor.

In this implementation, the first connecting member 10 comprises two movable connecting portions 11 arranged opposite each other, the connecting portions 11 being configured to be detachably mounted to the robot body 2. In this implementation, the connecting portion 11 may, but is not limited to, be detachably connected to the robot body 2 by means of engagement, bonding, or a bolt. It should be noted that in this implementation, the connecting portion 11 is schematically illustrated by means of engagement.

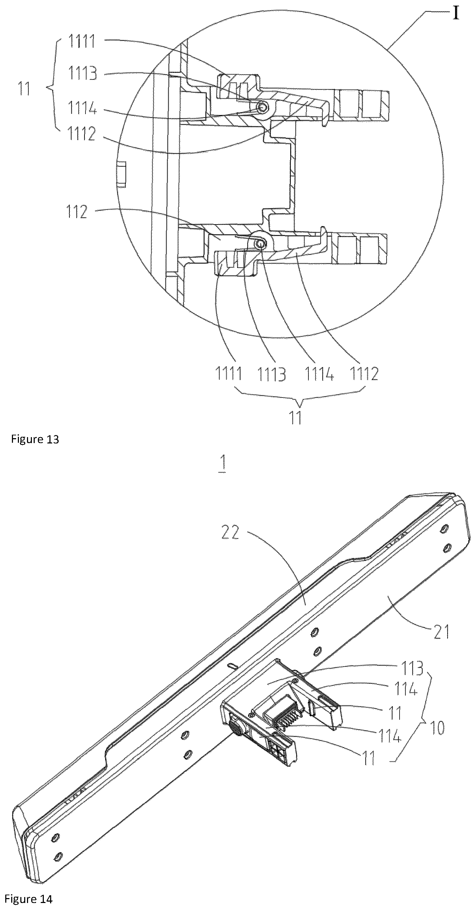

Referring to FIG. 13, FIG. 13 is a partial enlarged schematic diagram of the anti-collision device at part I according to the implementation of FIG. 12. In this implementation, the first connecting member 10 has a receiving space 112. The connecting portion 11 is partially received in the receiving space 112. Specifically, the two connecting portions 11 are respectively provided with a receiving space 112 on opposite sides thereof. The connecting portion 11 comprises a pressing portion 1111, an engaging portion 1112, an elastic compression portion 1113, and a rotating portion 1114. The pressing portion 1111 abuts against one end of the elastic compression portion 1113 so that the elastic compression portion 1113 elastically abuts against the pressing portion 1111, and the pressing portion 1111 is connected to one end of the engaging portion 1112. The end of the engaging portion 1112 adjacent to the pressing portion 1111 is in fit connection with the rotating portion 1114, so that the engaging portion 1112 can rotate relative to the rotating portion 1114. The engaging portion 1112 is configured to engage with the robot body 2. The end of the engaging portion 1112 away from the pressing portion 1111 has a structure protruding towards the other connecting portion 11.

The elastic compression portion 1113 is located between the pressing portion 1111 and a side wall on the side of the receiving space 112 adjacent to the pressing portion 1111. Exemplarily, the elastic compression portion 1113 is in fit connection with the rotating portion 1114, and an end of the elastic compression portion 1113 away from the pressing portion 1111 elastically abuts against the first connecting member 10 to form a side wall on the side of the receiving space 112 opposite the pressing portion 1111 and adjacent to the rotating portion 1114. In some implementations, the elastic compression portion 1113 may also be located between the pressing portion 1111 and a side wall on the side of the receiving space 112 adjacent to the pressing portion 1111, and the elastic compression portion 1113 at one end abut against the side wall on the side of the receiving space 112 adjacent to the pressing portion 1111, and at the other end abuts against the pressing portion 1111. In this implementation, the anti-collision device 1 is divided into two processes, i.e. mounting and dismounting, and then the process of mounting and dismounting the anti-collision device 1 will be described in detail.

In this implementation, the specific process of mounting the anti-collision device 1 to the robot body 2 is as follows. By pressing the pressing portion 1111 such that the engaging portion 1112 rotates relative to the rotating portion 1114, the ends of the two engaging portions 1112 having protrusion structures move away from each other, so that the ends of the two engaging portions 1112 having the protrusion structures can be connected to the robot body 2. When the force applied to the pressing portion 1111 is removed, the force generated by the elastic compression portion 1113 due to elastic recovery causes the engaging portion 1112 to rotate relative to the rotating portion 1114, and the ends of the two engaging portions 1112 having the protrusion structures move towards each other until they abut against the robot body 2, so as to engage with the robot body 2, thus completing rapid installation of the anti-collision device 1 to the robot body 2.

In this implementation, the specific process of dismounting the anti-collision device 1 from the robot body 2 is as follows. By pressing the pressing portion 1111 such that the engaging portion 1112 is rotated relative to the rotating portion 1114, the ends of the two engaging portions 1112 having the protrusion structures move away from each other, so that the engaging portion 1112 is disengaged from the robot body 2, and the anti-collision device 1 is quickly dismounted from the robot body 2 by removing the anti-collision device 1.

The present application provides an anti-collision device 1. The anti-collision device 1 comprises a first substrate 21, an impact guard 22 and a first connecting member 10, wherein the impact guard 22 is connected to one side of the first substrate 21, and the first connecting member 10 is connected to a side of the first substrate 21 away from the impact guard 22. The first connecting member 10 comprises two movable connecting portions 11 arranged opposite each other, and the first connecting member 10 can be rapidly connected to or disconnected from the robot body 2 by means of the two movable connecting portions 11, thus achieving quick mounting and dismounting of the anti-collision device. Therefore, the anti-collision device 1 is easily mounted to or dismounted from the robot body 2, thus facilitating regular maintenance of the anti-collision device 1, and reducing the time cost of dismounting and mounting the anti-collision device 1 during maintenance. In addition, in the event of the anti-collision device 1 being damaged, the anti-collision device 1 can be quickly dismounted and replaced with a new one in a timely manner, in order to reduce the economic loss of the robot 1000 due to downtime. Therefore, the anti-collision device 1 provided in the present application can be quickly and easily mounted to or dismounted from the robot body 2 via the movable connecting portion 11, which facilitates the maintenance and replacement of the anti-collision device 1.

Referring to FIG. 14, FIG. 14 is a schematic structural diagram of an anti-collision device according to another implementation of the present application. In this implementation, the anti-collision device 1 comprises a first substrate 21, an impact guard 22 and a first connecting member 10. The impact guard 22 is connected to one side of the first substrate 21. The first connecting member 10 is connected to the side of the first substrate 21 away from the impact guard 22, and comprises two movable connecting portions 11 arranged opposite each other. The connecting portions 11 are arranged for detachable mounting with the robot body 2. In addition, in this implementation, the first connecting member 10 further comprises a first bearing portion 113 and a first support 114. The first bearing portion 113 is connected to the side of the first substrate 21 away from the impact guard 22, and serves to bear the two connecting portions 11. The first support 114 protrudes from the first bearing portion 113 in a direction away from the first substrate 21.

In this implementation, the number of the first supports 114 may be one or more, and the first supports 114 increase the stability of connection of the first connecting member 10 with the robot body 2 by cooperating with the robot body 2, which increases the stability of connection between the anti-collision device 1 and the robot body 2.

Specifically, in this implementation, the number of the first supports 114 being two is schematically illustrated. Two first supports 114 protrude from the first bearing portion 113 in a direction away from the first substrate 21, and the two first supports 114 are disposed oppositely at two ends of the first bearing portion 113. In addition, two movable connecting portions 11 are disposed oppositely at two ends of the first bearing portion 113, and one connecting portion 11 is disposed correspondingly adjacent to one of the first supports 114, so that the first connecting member 10 is more balanced and stable when connected to the robot body 2, which in turn increases the stability of the connection of the anti-collision device 1 to the robot body 2. Specifically, the first support 114 is of a tapered structure, and the first support 114 has an outer diameter at an end remote from the first bearing portion 113 that is smaller than an outer diameter at an end close to the first bearing portion 113. In addition, the first support 114 has two grooves of the tapered structure that are disposed opposite each other. An inner diameter of the groove of the tapered structure on the first support 114 at the end remote from the first bearing portion 113 is greater than that of the groove of the tapered structure on the first support 114 at the end close to the first bearing portion 113.

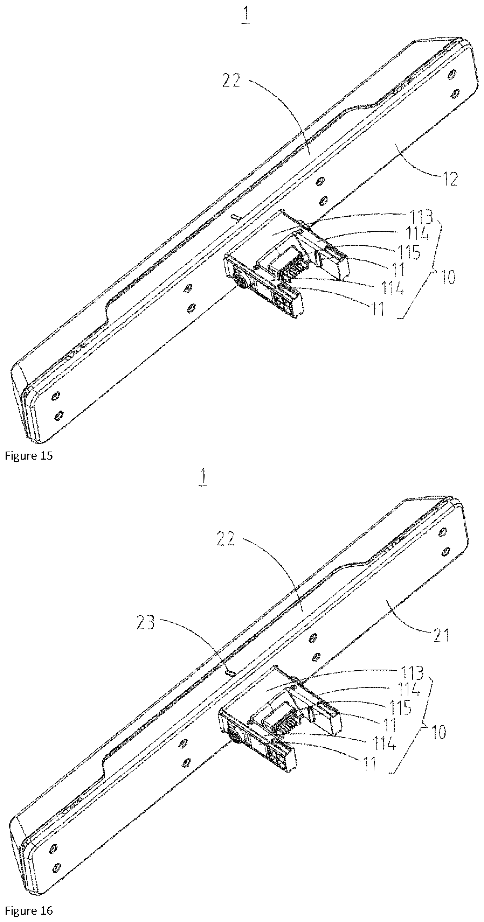

Referring to FIG. 15, FIG. 15 is a schematic structural diagram of an anti-collision device according to a further implementation of the present application. In this implementation, the anti-collision device 1 comprises a first substrate 21, an impact guard 22 and a first connecting member 10. The impact guard 22 is connected to one side of the first substrate 21. The first connecting member 10 is connected to the side of the first substrate 21 away from the impact guard 22, and comprises two movable connecting portions 11 arranged opposite each other. The connecting portions 11 are arranged for detachable mounting with the robot body 2. The first connecting member 10 further comprises a first bearing portion 113 and a first support 114. The first bearing portion 113 is connected to the side of the first substrate 21 away from the impact guard 22, and serves to bear the two connecting portions 11. The first support 114 protrudes from the first bearing portion 113 in a direction away from the first substrate 21. In addition, in this implementation, the first connecting member 10 further comprises a first signal interface 115. The first signal interface 115 is disposed on a side of the first bearing portion 113 away from the first substrate 21, and the first signal interface 115 is used for signal transmission.

In this implementation, the first signal interface 115 is configured, after the anti-collision device 1 is connected to the robot body 2, to transmit an obstacle sensing signal of the impact guard 22 to the robot body 2 so as to allow the robot body 2 to perform a corresponding avoidance action.

In this implementation, the first signal interface 115 is disposed on the side of the first bearing portion 113 away from the first substrate 21. Specifically, the number of the first supports 114 being two is schematically illustrated. Two first supports 114 protrude from the first bearing portion 113 in a direction away from the first substrate 21, and the two first supports 114 are disposed oppositely at two ends of the first bearing portion 113. In addition, two movable connecting portions 11 are disposed oppositely at two ends of the first bearing portion 113, and one connecting portion 11 is disposed correspondingly adjacent to one of the first supports 114. The first signal interface 115 is arranged between the two first supports 114 so that the first signal interface 115 can be protected by the two first connecting portions 11 to prevent the first signal interface 115 from being damaged. In addition, in an implementation, the first signal interface 115 is recessed in the first bearing portion 113 to further protect the first signal interface 115. In another implementation, the first signal interface 115 protrudes from the first bearing portion 113. In addition, the shape of the first signal interface 115 may be, but is not limited to, square, circular, or sheet-like. In this implementation, the first signal interface 115 protrudes from the first bearing portion 113, and the first signal interface 115 is schematically shown in a multi-piece shape.

Referring to FIG. 16, FIG. 16 is a schematic structural diagram of an anti-collision device according to a further implementation of the present application. In this implementation, the anti-collision device 1 comprises a first substrate 21, an impact guard 22 and a first connecting member 10. The impact guard 22 is connected to one side of the first substrate 21. The first connecting member 10 is connected to the side of the first substrate 21 away from the impact guard 22, and comprises two movable connecting portions 11 arranged opposite each other. The connecting portions 11 are arranged for detachable mounting with the robot body 2. The first connecting member 10 further comprises a first bearing portion 113 and a first support 114. The first bearing portion 113 is connected to the side of the first substrate 21 away from the impact guard 22, and serves to bear the two connecting portions 11. The first support 114 protrudes from the first bearing portion 113 in a direction away from the first substrate 21. The first connecting member 10 further comprises a first signal interface 115. The first signal interface 115 is disposed on the side of the first bearing portion 113 away from the first substrate 21, and the first signal interface 115 is used for signal transmission. In addition, in this implementation, the anti-collision device 1 further comprises a signal light 23. The signal light 23 is provided on the impact guard 22, and the signal light 23 is electrically connected to the first signal interface 115.

In this implementation, the signal light 23 is electrically connected to the first signal interface 115. When the first connecting member 10 is connected to the robot body 2, the first signal interface 115 will be switched on, causing the signal light 23 to light up. Therefore, in this implementation, the signal light 23 can be configured to judge whether the anti-collision device 1 is properly connected to the robot body 2.

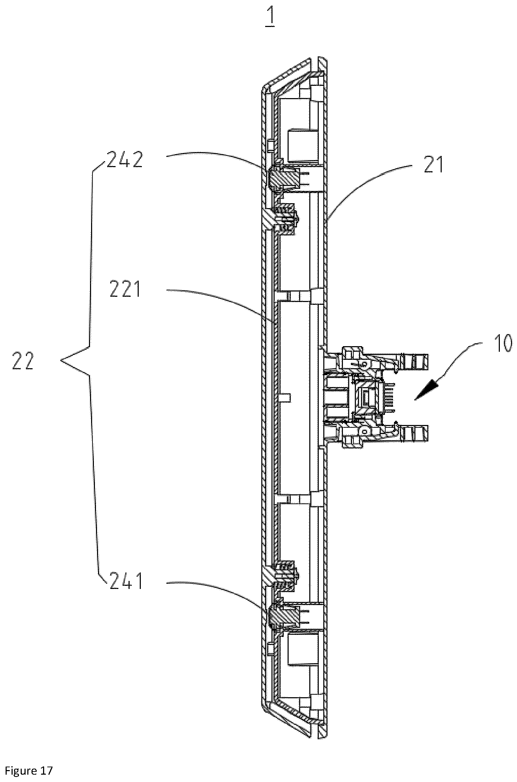

Referring to FIGS. 2, 15 and 17, FIG. 17 is a schematic cross-sectional view along line A-A of another implementation of the anti-collision device according to the implementation of FIG. 11. In this implementation, the anti-collision device 1 comprises a first substrate 21, an impact guard 22 and a first connecting member 10. The impact guard 22 is connected to one side of the first substrate 21. The first connecting member 10 is connected to the side of the first substrate 21 away from the impact guard 22, and comprises two movable connecting portions 11 arranged opposite each other. The connecting portions 11 are arranged for detachable mounting with the robot body 2. The first connecting member 10 further comprises a first bearing portion 113 and a first support 114. The first bearing portion 113 is connected to the side of the first substrate 21 away from the impact guard 22, and serves to bear the two connecting portions 11. The first support 114 protrudes from the first bearing portion 113 in a direction away from the first substrate 21. The first connecting member 10 further comprises a first signal interface 115. The first signal interface 115 is disposed on the side of the first bearing portion 113 away from the first substrate 21, and the first signal interface 115 is used for signal transmission. In addition, in this implementation, the impact guard 22 further comprises a second bearing portion 221, a movable portion 222 and at least one impact sensor 24. The second bearing portion 221 is fixedly connected to the first substrate 21. The movable portion 222 is disposed on a side of the second bearing portion 221 away from the first substrate 21. The movable portion 222 is movably connected to the second bearing portion 221. The impact sensor 24 is provided on the second bearing portion 221, and the impact sensor 24 is configured to emit an induced electrical signal when the movable portion 222 moves towards the second bearing portion 221 and abuts against the impact sensor 24. In this implementation, the first connecting member 10 is electrically connected to the robot body 2 and the impact sensor 24. And the impact sensor 24 transmits to the robot body 2 a signal of having an obstacle in front of the impact sensor 24 via the first connecting member 10, when the impact sensor 24 emits an induced electrical signal, which enables the robot 1000 to avoid the obstacle.

Optionally, in this implementation, the number of the impact sensors 24 is two, and in other implementations, the number of the impact sensors 24 may also be one, or three, or four, or more than four, which is not limited in the present application.

In this implementation, the two impact sensors 24 comprise a first switch 241 and a second switch 242. The first switch 241, electrically connected to the first signal interface 115, is disposed on the side of the second bearing portion 221 away from the first substrate 21, and the first switch 241 is disposed at an end of the second bearing portion 221 remote from the first connecting member 10. The second switch 242, electrically connected to the first signal interface 115, is located on the same side of the second bearing portion 221 as the first switch 241, and the second switch 242 is further from the first switch 241 than to the first connecting member 10.

In this implementation, the opposite ends of the second bearing portion 221 are provided with a first switch 241 and a second switch 242, respectively. The first switch 241 and the second switch 242 are electrically connected to the first signal interface 115, respectively. When the anti-collision device 1 is connected to the robot body 2, if an obstacle is touched at the first switch 241, the first switch 241 is triggered, and the first switch 241 transmits to the robot body 2 a signal of having an obstacle on the side of the first switch 241 via the first signal interface 115, thereby enabling the robot 1000 to avoid the obstacle. If an obstacle is touched at the second switch 242, the second switch 242 is triggered, and the second switch 242 transmits to the robot body 2 a signal of having an obstacle on the side of the second switch 242 via the first signal interface 115, thereby enabling the robot 1000 to avoid the obstacle. When the first switch 241 and the second switch 242 are triggered by an obstacle at the same time, the first switch 241 and the second switch 242 transmit to the robot body 2 a signal of having an obstacle directly in front of the anti-collision device 1 via the first signal interface 115, thereby enabling the robot 1000 to avoid the obstacle.

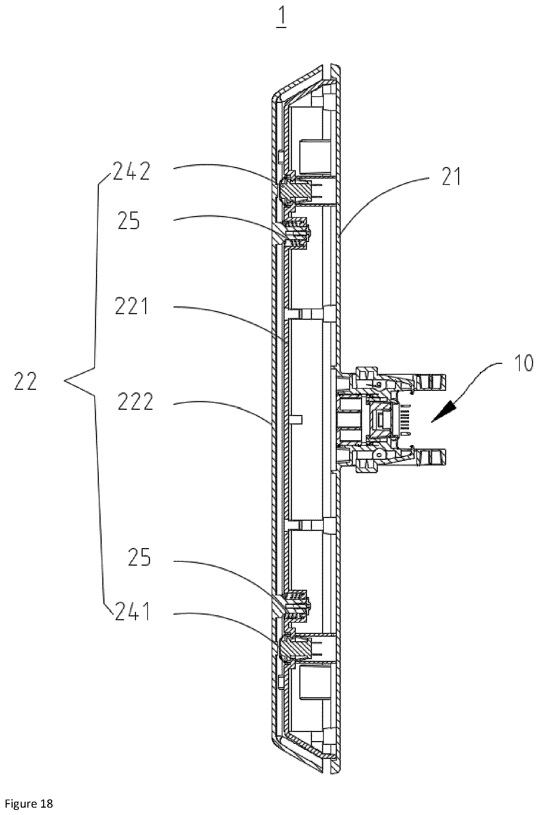

Referring to FIGS. 15 and 18, FIG. 18 is a schematic cross-sectional view along line A-A of yet another implementation of the anti-collision device according to the implementation of FIG. 11. In this implementation, the anti-collision device 1 comprises a first substrate 21, an impact guard 22 and a first connecting member 10. The impact guard 22 is connected to one side of the first substrate 21. The first connecting member 10 is connected to the side of the first substrate 21 away from the impact guard 22, and comprises two movable connecting portions 11 arranged opposite each other. The connecting portions 11 are arranged for detachable mounting with the robot body 2. The first connecting member 10 further comprises a first bearing portion 113 and a first support 114. The first bearing portion 113 is connected to the side of the first substrate 21 away from the impact guard 22, and serves to bear the two connecting portions 11. The first support 114 protrudes from the first bearing portion 113 in a direction away from the first substrate 21. The first connecting member 10 further comprises a first signal interface 115. The first signal interface 115 is disposed on the side of the first bearing portion 113 away from the first substrate 21, and the first signal interface 115 is used for signal transmission. The impact guard 22 further comprises a second bearing portion 221, a movable portion 222, a first switch 241, and a second switch 242. The second bearing portion 221 is fixedly connected to the first substrate 21. The movable portion 222 is disposed on the side of the second bearing portion 221 away from the first substrate 21. The movable portion 222 is movably connected to the second bearing portion 221. The first switch 241, electrically connected to the first signal interface 115, is disposed on the side of the second bearing portion 221 away from the first substrate 21, and the first switch 241 is disposed at the end of the second bearing portion 221 remote from the first connecting member 10. The second switch 242, electrically connected to the first signal interface 115, is located on the same side of the second bearing portion 221 as the first switch 241, and the second switch 242 is further from the first switch 241 than to the first connecting member 10. In addition, in this implementation, the impact guard 22 further comprises a second elastic member 25. The movable portion 222 is disposed on the side of the second bearing portion 221 away from the first substrate 21. The second elastic member 25 is arranged between the second bearing portion 221 and the movable portion 222, and the second elastic member 25 has one end abutting against the second bearing portion 221 and the other end abutting against the movable portion 222. The second elastic member 25 elastically connects the movable portion 222 and the second bearing portion 221. The second elastic member 25 is arranged between the second bearing portion 221 and the movable portion 222 so as to cushion a moving speed of the movable portion 222 towards the second bearing portion 221 when the working structure 20 is impacted, thereby preventing the movable portion 222 and the second bearing portion 221 from being damaged.

In this implementation, the movable portion 222 is connected to the second bearing portion 221 by one or more second elastic members 25. The movable portion 222 can be close to or remote from the second bearing portion 221 via the second elastic member 25. When coming into contact with an obstacle, the movable portion 222 may compress the second elastic member 25 and moves towards the second bearing portion 221 to touch at least one of the first switch 241 and the second switch 242. When the movable portion 222 is released from the obstacle, the movable portion 222 is moved in a direction away from the second bearing portion 221 due to an elastic restoring force of the second elastic member 25 that acts on the movable portion 222, so that the movable portion 222 is out of contact with the first switch 241 and the second switch 242 and returns to its original position. In addition, the movable portion 222 itself acts as a shield, further protecting the first switch 241 and the second switch 242. In addition, a larger range of obstacles can be identified by the movable portion 222.

Further, in an implementation, the elastic coefficient of the first elastic member 31 is less than or equal to the elastic coefficient of the second elastic member 25, and when the working structure 20 hits an obstacle, if the impact force exceeds a preset value, the working structure 20 is deflected and is cushioned by the deflection of the first elastic member 31 and the working structure 20 so as to reduce the rigidity of the anti-collision device 1 in the event of a collision.

In another implementation, the elastic coefficient of the second elastic member 25 is less than or equal to the elastic coefficient of the first elastic member 31, and when the working structure 20 hits an obstacle, the second elastic member 25 is used for cushioning in order to absorb part of the impact force, if the impact force exceeds a preset value, the working structure 20 is deflected, and cushioning is achieved by the deflection of the first elastic member 31 and the working structure 20, so as to reduce the rigidity of the anti-collision device 1 in the event of a collision.

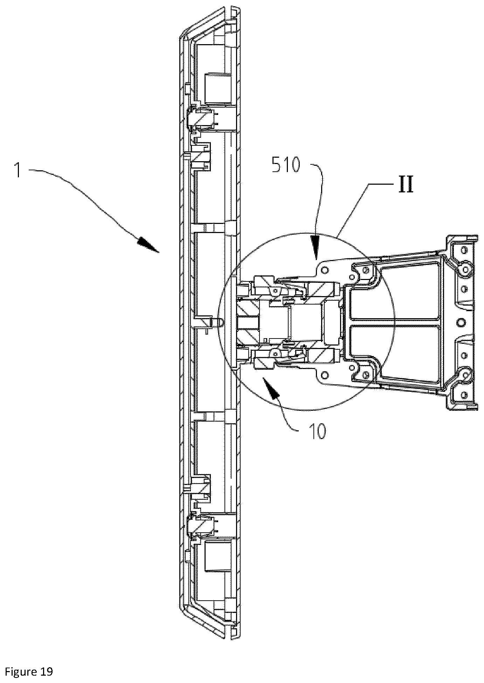

Referring to FIGS. 1 and 19, FIG. 19 is a schematic diagram of the first connecting member and the second connecting member of the robot according to an implementation of the present application. In this implementation, the robot 1000 comprises the anti-collision device 1 and the robot body 2 as in any of the previous implementations. The anti-collision device 1 is detachably mounted to the robot body 2. The robot body 2 comprises a second connecting member 510 detachably connected to the first connecting member 10.

In this implementation, the robot 1000 is used for automated operations, and the robot 1000 may be, but is not limited to, a lawnmower robot, a harvesting robot, a pesticide spraying robot, etc. In this implementation, the robot 1000 is used as a lawnmower robot for schematic illustration.

In this implementation, the anti-collision device 1 is detachably connected to the robot body 2 by the first connecting member 10 and the second connecting member 510, so as to achieve rapid mounting and dismounting of the anti-collision device 1, thereby facilitating the maintenance and repair of the anti-collision device 1.

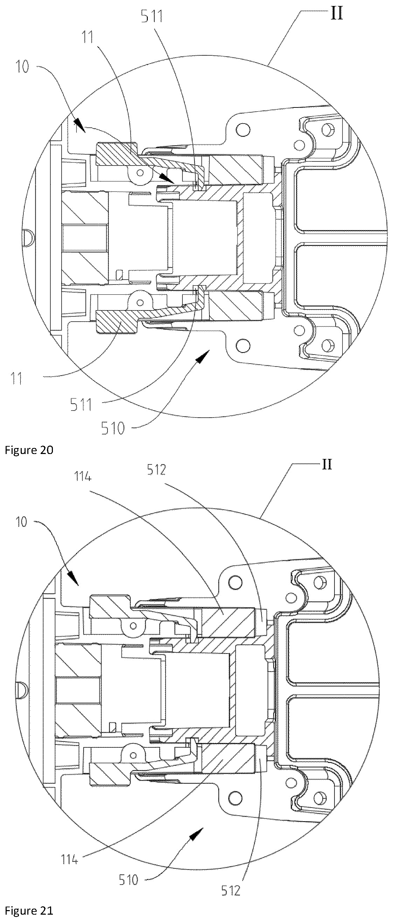

Referring to FIG. 1, FIG. 19 and FIG. 20, FIG. 20 is a partial enlarged schematic diagram according to an implementation at part II of the implementation of FIG. 19. In this implementation, the robot 1000 comprises the anti-collision device 1 and the robot body 2 as in any of the previous implementations. The robot body 2 comprises a second connecting member 510 detachably connected to the first connecting member 10. In addition, in this implementation, the second connecting member 510 comprises two fixed connecting portions 511 disposed opposite each other, and the fixed connecting portions 511 are in fit connection with the connecting portions 11 and can be configured to detachably connect the anti-collision device 1 to the robot body 2.

In this implementation, the fixed connecting portion 511 is configured to cooperatively connect with the connecting portion 11, so that the first connecting member 10 is in fit connection with the second connecting member 510, thereby achieving the connection of the anti-collision device 1 and the robot body 2. The fixed connecting portion 511 can be provided with a groove cooperating with the protrusion on the engaging portion 1112.

Referring to FIG. 1, FIG. 19 and FIG. 21, FIG. 21 is a partial enlarged schematic diagram according to another implementation at part II of the implementation of FIG. 19. In this implementation, the robot 1000 comprises the anti-collision device 1 and the robot body 2 as in any of the previous implementations. The robot body 2 comprises a second connecting member 510 detachably connected to the first connecting member 10. In addition, in this implementation, when the first connecting member 10 comprises the first support 114, the second connecting member 510 also comprises the second support 512. The second support 512 is in fit connection with the first support 114.

In this implementation, the second support 512 is partially recessed to the robot body 2, so as to form a fit with the first support 114, and through cooperation with the first support 114, to enhance the stability of the connection between the anti-collision device 1 and the robot body 2.

Specifically, the first support 114 is of a tapered structure, and the first support 114 has an outer diameter at an end remote from the first bearing portion 113 that is smaller than an outer diameter at an end close to the first bearing portion 113. The second support 512 is of a tapered hole structure in fit connection with the first support 114 so as to be in fit connection with the first support 114. In addition, the first support 114 has two grooves of the tapered structure that are disposed opposite each other, and an inner diameter of the groove of the tapered structure on the first support 114 at the end remote from the first bearing portion 113 is greater than that of the groove of the tapered structure on the first support 114 at the end close to the first bearing portion 113. The tapered structure having a protrusion in the second support 512 cooperates with a groove of a tapered structure in the first support 114 so as to limit the first support 114, thereby enhancing the stability of engagement of the first connecting member 10 with the second connecting member 510, that is, the stability of the connection between the anti-collision device 1 and the robot body 2 is enhanced.

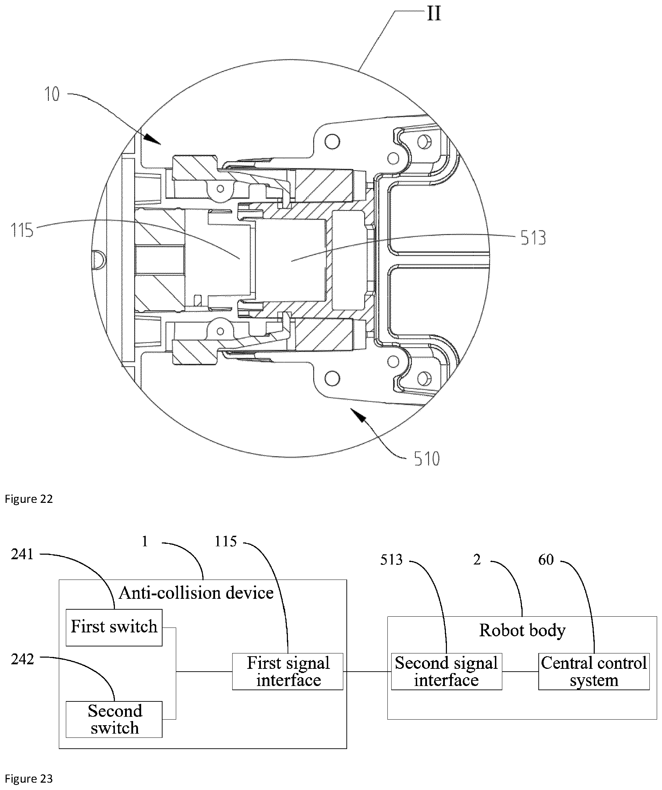

Referring also to FIGS. 1, 19, 20, 21, 22 and 23, FIG. 22 is a partial enlarged schematic diagram according to a further implementation at part II of the implementation of FIG. 19; FIG. 23 is a block diagram of a connection for transmitting a trigger signal for the robot according to the implementation of FIG. 22. In this implementation, the robot 1000 comprises the anti-collision device 1 and the robot body 2 as in any of the previous implementations. The robot body 2 comprises a second connecting member 510 detachably connected to the first connecting member 10. The second connecting member 510 also comprises a second support 512. The second support 512 is in fit connection with the first support 114. In addition, in this implementation, if the first connecting member 10 comprises the first signal interface 115, the second connecting member 510 also comprises the second signal interface 513. The second signal interface 513 is electrically connected to the first signal interface 115 to receive a trigger signal. At least one of the first switch 241 and the second switch 242 is triggered to generate a trigger signal when the anti-collision device 1 comes into collision with an obstacle. The robot 1000 also comprises a central control system 60. The central control system 60 is electrically connected to the second signal interface 513, and the central control system 60 is configured to control the movement of the robot body 2 in accordance with the trigger signal to avoid the obstacle.

In this implementation, the second signal interface 513 is electrically connected to the first signal interface 115 so that the central control system 60 can receive a trigger signal from the second signal interface 513. Specifically, the robot 1000 is schematically shown as an example of a lawn mower. When the movable portion 222 abuts against the obstacle on the side of the first switch 241, the movable portion 222 moves on the side of the first switch 241 relative to the second bearing portion 221 by the second elastic member 25. When the movable portion 222 abuts against the first switch 241 on the side of the first switch 241, the first switch 241 is triggered, and the first switch 241 transmits to the central control system 60 a signal of having an obstacle on the side of the first switch 241 via the first signal interface 115 and the second signal interface 513. The central control system 60 controls the robot body 2 to stop mowing, to retreat and to move towards the side of the second switch 242, thereby continuing the mowing away from the obstacle on the side of the first switch 241. When the movable portion 222 abuts against the obstacle on the side of the second switch 242, the movable portion 222 moves on the side of the second switch 242 relative to the second bearing portion 221 by the second elastic member 25. When the movable portion 222 abuts against the second switch 242 on the side of the second switch 242, the second switch 242 is triggered, and the second switch 242 transmits to the central control system 60 a signal of having an obstacle on the side of the second switch 242 via the first signal interface 115 and the second signal interface 513. The central control system 60 controls the robot body 2 to stop mowing, to retreat and to move towards the side of the first switch 241, thereby avoiding the obstacle on the side of the second switch 242 and continuing the mowing. Specifically, when the middle portion of the movable portion 222 abuts against the obstacle, the movable portion 222 moves relative to the second bearing portion 221 by the second elastic member 25, and when the movable portion 222 abuts against the first switch 241 and the second switch 242, the first switch 241 and the second switch 242 are triggered, and at least one of the first switch 241 and the second switch 242 transmits to the central control system 60 a signal of having an obstacle directly in front of the robot 1000 via the first signal interface 115 and the second signal interface 513. The central control system 60 controls the robot body 2 to stop mowing, to retreat and to turn in the direction of an unmowing area, thereby avoiding the obstacle directly in front of the robot 1000 and continuing the mowing.

Some implementations of the present application are provided above, and it should be noted that for those of ordinary skill in the art, several improvements and modifications may also be made without departing from the principle of the present application, and these improvements and modifications are also considered to be within the scope of protection of the present application.

## Claims

1. An anti-collision device, **characterized in that** the anti-collision device is configured to be mounted to a robot body, the anti-collision device comprising:
a first connecting member fixedly connected to the robot body;
a working structure provided on a side of the first connecting member away from the robot body; and
a first elastic member located between the first connecting member and the working structure, the first elastic member deforms when the working structure is impacted.

2. The anti-collision device according to claim 1, **characterized in that** the working structure comprises a first substrate and an impact guard disposed on a side of the first substrate away from the first connecting member;
the first substrate comprises a first arm, a mounting portion, and a second arm arranged in sequence; and
at least one first elastic member is provided, the first elastic member elastically abuts between the mounting portion and the first connecting member, and the first elastic member is disposed in a direction perpendicular to or intersecting with an extension direction of the first substrate, the first substrate being deflectable relative to the first connecting member.

3. The anti-collision device according to claim 1, **characterized in that** two first elastic members are provided, the two first elastic members being arranged side by side in an extension direction of the working structure.

4. The anti-collision device according to claim 2, **characterized in that** at least one first through hole is provided in the first substrate;
the first connecting member comprises a first bearing portion and a first fixing member extending through the first through hole, the first fixing member being fixedly connected to the first bearing portion at one end and being provided with a first blocking portion at the other end; and
the first elastic member surrounds the first fixing member, and the first elastic member has one end abutting against the first blocking portion and the other end abutting against the first substrate.

5. The anti-collision device according to claim 4, **characterized in that** the first through hole is configured as an elongated hole, the first through hole extending in the same direction as the first substrate.

6. The anti-collision device according to claim 2, **characterized in that** the first connecting member comprises a second substrate having at least one second through hole formed therein, the working structure further comprises a second fixing member fixed to the first substrate through the second through hole, a second blocking portion is provided at an end of the second fixing member away from the second substrate, the first elastic member surrounds the second fixing member, and the first elastic member has one end abutting against the second blocking portion and the other end abutting against the second substrate.

7. The anti-collision device according to claim 1, **characterized in that** the anti-collision device further comprises a rotating assembly arranged between the working structure and the first connecting member, the rotating assembly comprises a first mating portion and a second mating portion, the first mating portion is arranged on the working structure, the second mating portion is arranged on the first connecting member, and the first mating portion is rotatable relative to the second mating portion when the working structure is deflected relative to the first connecting member.

8. The anti-collision device according to claim 7, **characterized in that** one of the first mating portion and the second mating portion is a ball hinge bearing and the other is a ball hinge; or one of the first mating portion and the second mating portion is a pivot bearing and the other is a rotating member; or one of the first mating portion and the second mating portion is a torsion spring bearing and the other is a rotating member.

9. The anti-collision device according to any one of claims 1-8, **characterized in that** the working structure comprises:
a first substrate; and
an impact guard connected to one side of the first substrate; wherein the first connecting member is connected to a side of the first substrate away from the impact guard, the first connecting member comprises two movable connecting portions disposed opposite each other, and the connecting portion is detachably mounted to the robot body.

10. The anti-collision device according to claim 9, **characterized in that** the first connecting member further comprises:
a first bearing portion connected to the side of the first substrate away from the impact guard and bears the two connecting portions; and
a first support protruding from the first bearing portion in a direction away from the first substrate.

11. The anti-collision device according to claim 10, **characterized in that** the two connecting portions are respectively provided with a receiving space on opposite sides thereof, and the connecting portion is partially received in the receiving space; the connecting portion comprises a pressing portion, an engaging portion, an elastic compression portion, and a rotating portion; and the elastic compression portion is located between the pressing portion and a side wall on the side of the receiving space adjacent to the pressing portion, the pressing portion is connected to the engaging portion, an end of the engaging portion adjacent to the pressing portion is in fit connection with the rotating portion, the engaging portion is rotatable relative to the rotating portion, and the engaging portion is configured to engage with the robot body.

12. The anti-collision device according to claim 10, **characterized in that** the first connecting member further comprises a first signal interface, the first signal interface being disposed on a side of the first bearing portion away from the first substrate, and the first signal interface being configured for signal transmission.

13. The anti-collision device according to claim 12, **characterized in that** the anti-collision device further comprises a signal light arranged on the impact guard, the signal light being electrically connected to the first signal interface.

14. The anti-collision device according to claim 12 or 13, **characterized in that** the impact guard comprises:
a second bearing portion fixedly connected to the first substrate;
a first switch disposed on a side of the second bearing portion away from the first substrate, the first switch being disposed at an end of the second bearing portion remote from the first connecting member, and the first switch being electrically connected to the first signal interface; and
a second switch disposed on the same side of the second bearing portion as the first switch, the second switch being further from the first switch than to the first connecting member, and the second switch being electrically connected to the first signal interface.

15. The anti-collision device according to claim 14, **characterized in that** the impact guard further comprises:
a movable portion disposed on the side of the second bearing portion away from the first substrate; and
a second elastic member elastically connected to the movable portion and the second bearing portion.

16. A robot, **characterized by** comprising an anti-collision device according to any one of claims 1-15; and
a robot body, the anti-collision device being detachably mounted to the robot body.

17. The robot according to claim 16, **characterized in that** the robot body comprises a second connecting member detachably connected to the first connecting member, wherein the first connecting member comprises a connecting portion, and the second connecting member comprises two fixed connecting portions arranged opposite each other, the fixed connecting portions being in fit connection with the connecting portions and being useful for detachably connecting the anti-collision device to the robot body.

18. The robot according to claim 16, **characterized in that** the robot body comprises a second connecting member detachably connected to the first connecting member, the first connecting member comprising a first support, and the second connecting member further comprising:
a second support in fit connection with the first support.

19. The robot according to any one of claims 16-18, **characterized in that** the robot body comprises a second connecting member detachably connected to the first connecting member, the working structure comprises a second bearing portion, a first switch and a second switch, the first connecting member comprises a first signal interface, and the second connecting member further comprises:
a second signal interface electrically connected to the first signal interface to receive a trigger signal, wherein at least one of the first switch and the second switch is triggered to generate the trigger signal when the anti-collision device comes into collision with an obstacle;
wherein the robot further comprises a central control system electrically connected to the second signal interface, the central control system being configured to control the robot body to move in accordance with the trigger signal so as to avoid the obstacle.
